# EUROPEAN PATENT SPECIFICATION

(11) **EP 1 979 657 B1**
(45) Date of publication and mention of the grant of the patent: **29.07.2009**
(21) Application number: 07709237.7
(22) Date of filing: 05.01.2007
(51) Int. Cl.: F16K 11/074, G05D 23/13, F16K 31/00

(54) **TEMPERATURE LIMITING DEVICE APPLICABLE TO SINGLE LEVER VALVES FOR MIXING HOT AND COLD LIQUIDS WITH AN IMPROVED INLET PORT**
AUF EINHEBELVENTILE ANWENDBARE TEMPERATURBEGRENZUNGSVORRICHTUNG ZUM MISCHEN VON HEISSEN UND KALTEN FLÜSSIGKEITEN MIT EINER VERBESSERTEN EINLASSÖFFNUNG
DISPOSITIF DE LIMITATION DE TEMPERATURE PRESENTANT UN PORT D'ENTREE PERFECTIONNE, POUVANT ETRE UTILISE DANS DES SOUPAPES A CONTREPOIDS UNIQUE, POUR MELANGER DES LIQUIDES CHAUDS ET FROIDS

(30) Priority: 11.01.2006 NZ 54459706
(43) Date of publication of application: 15.10.2008
(73) Proprietor: Greens Industries Limited, Hamilton (NZ)
(72) Inventor: GREEN, John William, Hamilton (NZ); MORAN, Ian, Hamilton (NZ)
(74) Representative: Suèr, Steven Johannes
(86) International application number: PCT/NZ2007/000001
(87) International publication number: WO 2007/081223

(56) References cited:
- EP-A- 0 611 260
- WO-A-00/68754
- WO-A-20/05028930
- US-A- 3 929 283
- US-A- 4 610 393
- US-B1- 6 517 006

## Description

### Background

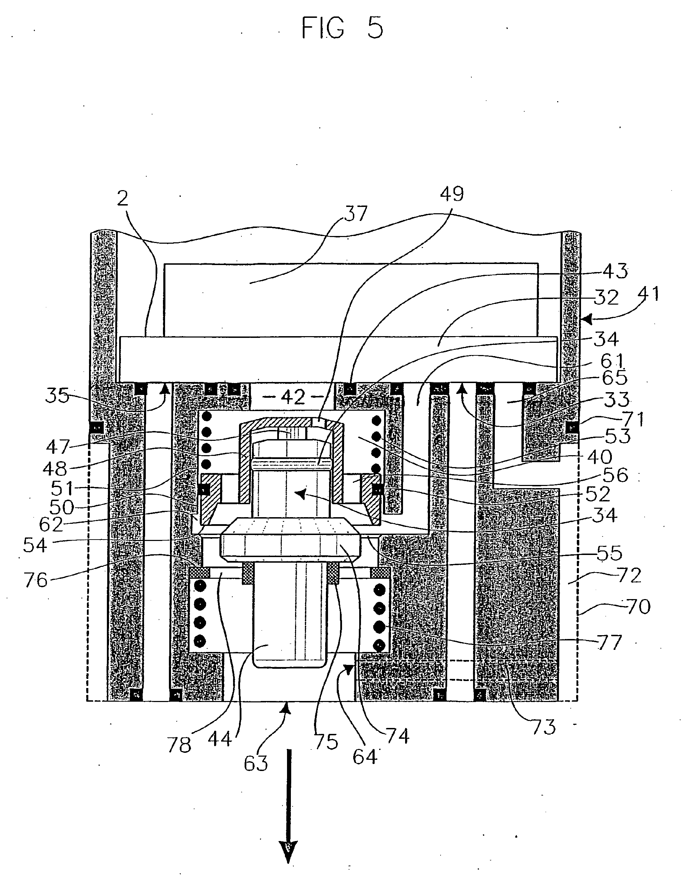

In our international patent application PCT/NZ2004/000225, published under WO2005/028930 on 31st March 2005, we described a temperature limiting device applicable to single lever valves for mixing hot and cold liquids. This invention relates to an improvement to the construction which is shown in Figure 5 of that specification. The definitions in that specification are applicable to this and it is intended that the whole contents of that specification be treated as if repeated in this in order to enable the context of the present invention. One of the reasons for this improvement, when the earlier invention was applied to a cartridge, was to reduce the diameter of the cartridge to the standard 40mm which is prevalent throughout Europe and elsewhere.

### Prior art and description of drawings

Referring to the aforementioned prior art Figure 5, a copy of which is incorporated with this specification, hot liquid comes to the convergence space 40 via chamber inlet port 42. The chamber inlet port 42 is able to be closed by the cap 48 to restrain or prevent the hot liquid inflow under certain circumstances.

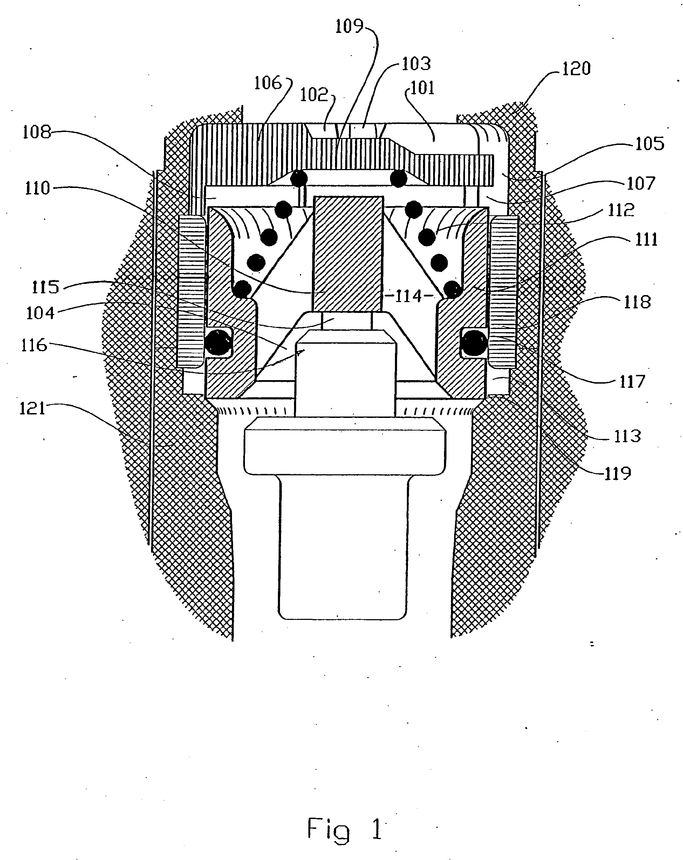

The present invention will shortly be described with reference to the accompanying schematic drawing labelled Figure 1 which is a cross sectional view of modifications to the central part of the Figure 5 arrangement.

Thus the present invention consists in an improvement to the invention claimed in PCT/NZ2004/000225 in that the convergence space has an axis and a substantially cylindrical wall coaxial with said axis; the flow regulating means includes a movable piston capable of moving within the cylindrical chamber defined by said cylindrical wall to slide to and fro in axial directions, there are sealing means to maintain a seal between the periphery of the piston and said cylindrical wall, there is an orifice through said piston which may offer communication between the hot and cold inlet passages; and where both the hot liquid inlet passage and the first cold liquid inlet passage communicate with said convergence space via or adjacent said cylindrical wall and said piston includes portions which may be positioned to effect complete closure of said hot inlet passage with full opening of said first cold liquid inlet passage and vice versa and in positions where there is partial opening/closure of both said passages.

### Best Mode of Carrying Out the Invention

According to the present invention, the chamber inlet port no longer leads directly into the convergence space 40 from "above". Instead there are one or more hot liquid inlet passages, preferably radial passages such as 101 and 102 which lead from the area 103 where the hot liquid enters the illustrated portion of the device, in use, towards the periphery of the convergence space 104. The passages such as 101 and 102 then extend "downwardly" through legs such as 105 and the means of entry into the convergence space 104 is at the side or sides of the convergence space through apertures or ports such as 107 and 108 which are also part of the hot liquid inlet passage(s). There may be six ribs such as 106 formed on the upper surface of the portion 109 and the spaces between these radial ribs form the passages 101, 102, etc. However, Figure 1 shows an uneven number of ribs so that they could be better illustrated. The cap 110 replaces the previous cap 48 which had a restriction and sealing function and cap110 now functions purely as a depth stop preventing damage to the parts of the flow regulating means which now effect closure of the side entry ports such as 107 and 108.

That closure is effected by means of a substantially cylindrical piston 111 which is normally biased by a compression spring 112 to a downward position where it effects closure of a circumferential "first" cold liquid inlet passage 113. Radial ribs such as 114 may be six in number and join the piston 111 to the cap 110. Thus when the piston 115 of a heated temperature sensing device 116 is thrust towards the portion 109 it lifts the cap 110 and with it the piston 111 to uncover the first cold liquid inlet passage 113 while closing off or restricting the hot liquid inlet passage(s).

O-ring 117 provides a seal to a wall insert part 118 of the device and the design achieves balanced hydraulic pressures above and below the O-ring with equal or uneven pressure hot and cold liquid supplies. The seal comes into play when either the hot liquid inlet passage or the first cold liquid inlet passage is closed to prevent leakage past the piston outer wall.

At the same time as the piston 111 is being raised, it restricts (or closes off) the hot liquid entry ports such as 107 and 108, to restrict the flow through them, and that restricted hot flow mingles with the cold liquid which has been admitted by unseating of the seal at the area 119 to provide cooling of the hot liquid inlet stream.

The arrangement is designed so that when the piston 111 has effected complete closure of the hot liquid entry ports 107 and 108 the cap 110 contacts the portion 109 to prevent any damage to the piston 111 which might lightly touch portion 109 and might be inherently resilient if made of a plastics material. The piston does not need to effect an absolutely leaktight seal for the device to operate properly.

The wall insert part 118 is matched in internal diameter to the external diameter of the piston 111. Once the portion 109 has been assembled in the first case portion 120 the wall insert 118 is positioned and holds the portion 109 in fixed position ultimately as second case portion 121 is added and secured.

| Ref | Item |
|---|---|
| 101 | Hot liquid inlet passage |
| 102 | Hot liquid inlet passage |
| 103 | Hot liquid entry area |
| 104 | Convergence space |
| 105 | Passage leg |
| 106 | Rib |
| 107 | Entry aperture/port |
| 108 | Entry aperture/port |
| 109 | Portion with ribs |
| 110 | Cap |
| 111 | Piston |
| 112 | Spring |
| 113 | First cold liquid inlet |
| 114 | Radial rib |
| 115 | Piston of 116 |
| 116 | Temperature sensing device |
| 117 | O ring |
| 118 | Wall insert |
| 119 | Seal |
| 120 | First case portion |
| 121 | Second case portion |
| 122 | |
| 123 | |
| 124 | |
| 125 | |
| | |
| | |
| | |
| | |

## Claims

1. A device for mixing and regulating the output temperature of a hot liquid and a cold liquid, including:
a mixing chamber (40);
a hot liquid entry port (42) into said chamber (40),
a first cold liquid entry port (113) into said chamber (40),
an outlet (18) from said chamber (40);
an outlet passage (63) from the device which communicates with said chamber outlet (18);
mix proportioning means (48, 54) within said chamber (40) able to alter the proportions of hot and cold liquids admitted through said entry ports (42, 113) into said chamber (40) at any rate of combined output flow;
a temperature sensing device (116) adapted to sense the temperature of the output of the mixed liquids from the chamber (40) and to control the mix proportioning means (48, 54) so that the output temperature at all output flow rates from the chamber (40) can never exceed, except for a small tolerance for a small time, a selected maximum; and
a second cold liquid entry port (64) into the output passage (63) of the device downstream from where the temperature of the output flow from the chamber is sensed,
the mixing chamber (40) having a cylindrical wall, the hot liquid entry port (42) and the first cold liquid entry port (113) into said chamber (40) being at the side at or adjacent opposite ends of said cylindrical wall (51) and the mix proportioning means (48, 54) including joined sealing means slidable within the chamber (40) under the control of the temperature sensing device (116) so that as the cold liquid entry port into the chamber (40) is progressively opened the hot liquid entry port (42) is progressively closed and vice versa, the mix proportioning means (48, 54) enabling the following states of the device to be achieved:
the hot liquid entry port (42) being completely closed while the first cold liquid entry port (113) is completely open, and the first cold liquid entry port (113) being completely closed while the hot liquid entry port (42) is completely open **characterized in that** said hot liquid entry port (42) is part of a radially extending hot liquid inlet passage (101, 102).

2. A device as claimed in claim 1, which includes a stationary distributing member (28, 32) and a movable distributing member (37), the stationary distributing member (28, 42) having ports to the movable distributing member (37) for the supply of hot liquid and cold liquid to the movable distributing member (37), the movable distributing member (37) regulating the proportions of hot and cold liquid supplied to the hot liquid entry port (42) and to the cold liquid entry ports (113, 64) and the flow rates thereof, and enabling complete shut-off of all flows to said ports.

3. A device according to claim 2, further comprising a body (41) supporting the distributing members (28, 32, 37), and sealing means to seal between parts of the movable and stationary distributing members (28, 32, 37), a hot liquid inlet port (35) and said cold liquid inlet port (33) being provided in the stationary distributing member (28, 32), and a hot liquid transfer path (36) and a cold liquid transfer path (67) being provided in the movable distributing member (37); and further where all wholly or partly contained in the body, or all wholly or partly contained in the movable distributing member (37), or all wholly or partly contained in the stationary distributing member (28, 32) there is provided a convergence space (40), said hot liquid inlet passage communicating with said hot liquid transfer path (36) and with said convergence space (40), a first cold liquid inlet passage communicating with said cold liquid transfer path (67) and with said convergence space (40), an outlet from said convergence space (40), flow regulating means (48, 54) within the convergence space (40) capable of regulating the flow of hot and cold liquids entering said convergence space (40) by progressively opening the hot liquid inlet passage while progressively closing the first cold liquid inlet passage and vice versa and capable of effecting complete closure of said hot liquid inlet passage, said temperature sensing device (116) which controls the operation of the flow regulating means (48, 54) in said outlet, a temperature sensing portion of said temperature sensing device (116), said second cold liquid inlet passage communicating with said cold liquid transfer path (67) and with said outlet substantially downstream of said temperature sensing portion and the movable distributing member (28, 32) being movable to each of the following positions: where the hot liquid inlet port (42) communicates with the hot liquid transfer path (36) which communicates with the hot liquid inlet passage and at the same time the cold liquid inlet port (113) communicates with the cold liquid transfer path (67) which communicates with the first cold liquid inlet passage; or where the hot liquid inlet port (42) communicates with the hot liquid transfer path (36) which communicates with the hot liquid inlet passage and at the same time the cold liquid inlet port (113) communicates with the cold liquid transfer path (67) which communicates with the first cold liquid inlet passage and the cold liquid transfer path (67) also communicates with the second cold liquid inlet passage; or where the hot liquid inlet port (42) and the cold liquid inlet port (113) do not communicate with each other and block communication from both said hot liquid inlet port (42) and said cold liquid inlet port (113) with any said passage; **characterized in that** the flow regulating means (48, 54) includes a piston (111) in sealing but slidable contact with said cylindrical wall and the peripheral ends of the piston (111) effect closure or opening of the hot liquid and first cold liquid inlet ports (42, 113).

4. A device according to claim 3, wherein the convergence space (40) has an axis, and a cylindrical wall (51) coaxial with said axis and said flow regulating means includes a movable piston (111) sealingly slidable to and fro in axial directions within said cylindrical wall (51), and there is an orifice through said piston (111) which may offer communication between said hot and cold liquid inlet passages and wherein said first cold liquid inlet passage communicates with said convergence space (40) at or adjacent one end of said cylindrical wall (51) while said hot liquid inlet passage communicates with said convergence space (40) at or adjacent the other end of said cylindrical wall (51) and said piston (111) may be positioned over said first cold liquid inlet passage to a position where said passage is completely closed so that, in use, no cold liquid can then enter said convergence space (40), while the hot liquid inlet passage is fully open and vice versa, and positions inbetween where both passages are partially open.

5. A device according to any one of the preceding claims wherein there are a plurality of hot liquid entry ports.

6. A device according to any one of claims 2 to 5, wherein said cylindrical wall (51) axis is parallel to an axis about which said mix proportioning means (48, 54) may be rotated.

7. A device according to any one of the preceding claims, wherein said temperature sensing device (116) expands on sensed liquid temperature increase and contracts on sensed liquid temperature decrease, in axial directions.

8. A device according to any one of claims 2 to 7, wherein said temperature sensing device (116) includes a housing and a piston (115) capable of being moved axially to and fro with respect to said housing, coaxially with said cylindrical wall axis.

9. A device according to claim 8, wherein said temperature sensing device piston (115) can directly contact said mix proportioning means piston (111).

10. A device according to claim 9, wherein there is a resilient bias (53) which biases said temperature sensing device piston (115) to the most contracted position of the temperature sensing device (116).

11. A device according to claim 10, wherein said resilient bias (53) is a compression spring (53) located between the upper end of said chamber (40) and said flow regulating means piston (111).

12. A device according to any one of claims 3 to 11 wherein there is protection means for said temperature sensing device (116) which prevents pressure above a pro-determined maximum pressure, being developed within said housing.

13. A device according to any one of the preceding claims wherein the device is in the form a cartridge for a valve.

14. A device according to any one of the preceding claims, wherein the device is a valve and includes a single operating lever.

## Patentansprüche

1. Eine Vorrichtung zum Mischen und zur Regulierung der Ausgabetemperatur einer heißen Flüssigkeit und einer kalten Flüssigkeit, einschließlich:
einer Mischkammer (40),
einer Einlassöffnung für heiße Flüssigkeit (42) in die genannte Kammer (40),
einer ersten Einlassöffnung für kalte Flüssigkeit (113) in die genannte Kammer (40) einem Auslass (18) aus der genannten Kammer (40),
einem Ausgangskanal (63) von der Vorrichtung, der mit dem genannten Kammerauslass (18) in Verbindung ist;
einer Einrichtung zur Bestimmung des Mischungsverhältnisses (48,54) in der genannten Kammer (40), die das Verhältnis heißer und kalter Flüssigkeiten, die durch die genannten Einlassöffnungen (42, 113) in die genannte Kammer (40) einfließen, für jeden Anteil des vereinten Ausgangsflusse ändern kann;
eines Temperaturfühlers (116), der so adaptiert ist, dass er die Temperatur der von der genannten Kammer (40) ausfließenden gemischten Flüssigkeiten erfasst und die Einrichtung zur Bestimmung des Mischungsverhältnisses (48, 54) kontrollieren kann, damit die Temperatur aller Ausgangsfließraten aus der Kammer (40), abgesehen von einer geringfügigen Toleranz über einen kurzen Zeitraum, niemals ein ausgewähltes Maximum überschreiten; und
einer zweiten Einlassöffnung für kalte Flüssigkeiten (64) in den Ausgangskanal (63) der Vorrichtung stromab von der Stelle, wo die Temperatur der aus der Kammer ausfließenden Flüssigkeiten erfasst wird,
die Mischkammer (40) weist eine zylindrische Wand auf, wobei die Einlassöffnung für heiße Flüssigkeit (42) und die erste Einlassöffnung für kalte Flüssigkeit (113) an der Seite oder an entgegensetzten Enden der genannten zylindrischen Wand (51) sind, und die Einrichtung zur Bestimmung des Mischungsverhältnisses (48, 54) eine Abdichtvorrichtung hat, die innerhalb der Kammer unter Steuerung des Temperaturfühlers (116) verschoben werden kann, so dass die Einlassöffnung für kalte Flüssigkeit in die Kammer (40) nach und nach geöffnet und die Einlassöffnung für heiße Flüssigkeit (42) nach und nach geschlossen wird und umgekehrt, und die Einrichtung zur Bestimmung des Mischungsverhältnisses (48, 54) ermöglicht, dass die folgenden Zustände der Vorrichtung erzielt werden können:
die Einlassöffnung für heiße Flüssigkeit (42) ist völlig geschlossen, während die erste Einlassöffnung für kalte Flüssigkeit (113) ganz geöffnet ist, und die erste Einlassöffnung für kalte Flüssigkeit (113) ganz geschlossen ist, während die Einlassöffnung für heiße Flüssigkeit (42) ganz geöffnet ist, **dadurch gekennzeichnet, dass** die genannte Einlassöffnung für heiße Flüssigkeit (42) Bestandteil eines sich radial erstreckenden Einlasskanals für heiße Flüssigkeit (101, 102) ist.

2. Eine Vorrichtung gemäß Anspruch 1, zu der stationärer Verteiler (28, 32) und ein beweglicher Verteiler (37) gehören, wobei der stationäre Verteiler (28, 42) Öffnungen zum beweglichen Verteiler (37) hat, damit dem beweglichen Verteiler (37) heiße und kalte Flüssigkeit zugeführt werden kann, wobei der bewegliche Verteiler (37) die Anteile der heißen und kalten Flüssigkeit, die der Einlassöffnung für heiße Flüssigkeiten (42) und der Einlassöffnung für kalte Flüssigkeiten (113, 64) zugeführt werden, sowie deren Fließraten reguliert und eine komplette Sperre alle Zuflüsse zu genannten Öffnungen ermöglicht.

3. Eine Vorrichtung gemäß Anspruch 2, zu der zudem folgenden gehören, nämlich ein Teil (41) zur Unterstützung der Verteiler (28, 32, 37) und eine Dichtung zur Abdichtung zwischen Teilen des beweglichen und des stationären Verteilers (28, 32, 37), eine Einlassöffnung für heiße Flüssigkeit (35) und die genannte Einlassöffnung für kalte Flüssigkeit (33) die im stationären Verteiler (28, 32) vorgesehen sind , und ein Transferweg für heiße Flüssigkeit ( 36) und eine Transferweg für kalte Flüssigkeit (67), die im beweglichen Verteiler (37) vorhanden sind; und wenn zudem alle ganz oder teilweise in diesem Teil oder alle ganz oder teilweise im stationären Verteiler (28, 32) enthalten sind, dann ist ein Raum zum Zusammenfluss (40) vorgesehen, wobei der genannte Einlasskanal für heiße Flüssigkeit mit dem genannten Transferweg (36) für heiße Flüssigkeit und mit dem genannten Raum zum Zusammenfluss (40) in Verbindung ist, ein erster Einlasskanal für kalte Flüssigkeit mit dem Transferweg für kalte Flüssigkeit (67) und dem genannten Raum zum Zusammenfluss (40) in Verbindung ist, ein Auslass vom genannten Raum zum Zusammenfluss (40), Durchflussregler (48, 54) im Raum zum Zusammenfluss (40), der den Fluss heißer und kalter Flüssigkeiten, welche in den genannten Raum zum Zusammenfluss (40) fließen, reguliert, indem er nach und nach den Einlasskanal für heiße Flüssigkeit öffnet, während er nach und nach den ersten Einlasskanal für kalte Flüssigkeit schließt, und umgekehrt und in der Lage ist, ein komplettes Schließen des Einlasskanals für heiße Flüssigkeit zu bewirken, der genannten Temperaturfühler (116), der die Operation des Durchflussreglers (48, 54) im genannten Auslass kontrolliert, ein Temperaturerfassungsteils des genannten Temperaturfühlers (116), der genannten zweite Einlasskanal für kalte Flüssigkeit (67) und mit dem genannten Auslass mehr oder weniger stromab des genannten Temperaturerfassungsteils und der bewegliche Verteiler (28, 32), der in jede der folgenden Positionen bewegt werden kann: dort, wo die Einlassöffnung für heiße Flüssigkeit (42) mit dem Transferweg (36) in Verbindung ist, der mit dem Einlasskanal für heiße Flüssigkeit (36) in Verbindung ist, und gleichzeitig die Einlassöffnung für kalte Flüssigkeit (113) mit dem Transferweg für kalte Flüssigkeit (67) in Verbindung ist, der mit dem ersten Einlasskanal für kalte Flüssigkeit in Verbindung ist; oder dort, wo die Einlassöffnung für heiße Flüssigkeit (42) mit dem Transferweg für heiße Flüssigkeit (36) in Verbindung ist, der mit dem Einlasskanal für heiße Flüssigkeit in Verbindung ist, und gleichzeitig die Einlassöffnung für kalte Flüssigkeit (113) mit dem Transferweg für kalte Flüssigkeit (67) in Verbindung ist, die mit dem ersten Einlasskanal für kalte Flüssigkeit in Verbindung ist und der Transferweg für kalte Flüssigkeit (67) zudem mit dem zweiten Einlasskanal für kalte Flüssigkeit in Verbindung ist; oder dort, wo die Einlassöffnung für heiße Flüssigkeit (42) und die Einlassöffnung für kalte Flüssigkeit (113) nicht miteinander in Verbindung sind und die Verbindung von sowohl der genannten Einlassöffnung für heiße Flüssigkeit (42) als auch der genannten Einlassöffnung für kalte Flüssigkeit (113) zu einer der genannten Kanäle blockieren; **dadurch** ausgezeichnet, dass zum Durchflussregler ein Kolben (111) in abdichtbarem, jedoch verschiebbarem Kontakt mit der genannten zylindrischen Wand gehören und die peripheren Enden des Kolbens (111) ein Schließen oder Öffnen der Einlassöffnung für heiße (42) und der ersten Einlassöffnung für kalte (113) Flüssigkeit bewirken.

4. Eine Vorrichtung gemäß Anspruch 3, bei der der Raum zum Zusammenfluss eine Achse aufweist und eine zylindrische Wand (51) koaxial zur genannten Achse und ein Durchflussregler einen beweglichen Kolben (111) aufweisen, der abdichtend in axialer Richtung in der genannten zylindrischen Wand (51) hin und her verschiebbar ist, und dass der genannte Kolben (111) eine Öffnung aufweist, die eine Kommunikation zwischen den genannten Einlasskanälen für heiße und kalte Flüssigkeit ermöglichen könnte, und bei der der genannte erste Einlasskanal für kalte Flüssigkeit mit dem genannten Raum zum Zusammenfluss (40) am oder neben einem Ende der genannten zylindrischen Wand (51) in Verbindung ist, während der genannte Einlasskanal für heiße Flüssigkeit mit dem genannten Raum zum Zusammenfluss (40) am oder neben einem Ende der genannten zylindrischen Wand (51) in Verbindung ist, und der genannte Kolben (111) kann über dem genannten Einlasskanal für kalte Flüssigkeit in eine Position, in der der genannte Kanal völlig geschlossen ist, damit, in Gebrauch, keine kalte Flüssigkeit in den genannten Raum zum Zusammenfluss (40) eintreten kann, während der Einlasskanal für heiße Flüssigkeit ganz geöffnet ist, und umgekehrt, und die Positionen dazwischen, in denen beide Kanäle teilweise geöffnet sind, gebracht werden kann.

5. Eine Vorrichtung gemäß einem der vorhergehenden Ansprüche, bei der mehrere Einlassöffnungen für heiße Flüssigkeit vorhanden sind.

6. Eine Vorrichtung gemäß einem der Ansprüche 2 bis 5, bei der die Achse der genannten zylindrischen Wand (51) parallel zu einer Achse verläuft, um die die genannten Einrichtung zur Bestimmung des Mischungsverhältnisses (48, 54) rotiert werden kann.

7. Eine Vorrichtung gemäß einem der vorhergehenden Ansprüche, bei der der genannten Temperaturfühler (116) sich bei erfasstem Flüssigkeitstemperaturanstieg in axialer Richtung dehnt und bei erfasster Flüssigkeitstemperaturabnahme kontrahiert.

8. Eine Vorrichtung gemäß einem der Ansprüche 2 bis 7, bei der zum genannten Temperaturfühler (116) ein Gehäuse und ein Kolben (115) gehören, der hinsichtlich des genannten Gehäuses koaxial zur genannten zylindrischen Wand hin und her bewegt werden kann.

9. Eine Vorrichtung gemäß Anspruch 8, bei der der genannten Temperaturfühlerkolben (115) den genannten Kolben der Einrichtung zur Bestimmung des Mischungsverhältnisses (111) direkt in Kontakt kommen kann.

10. Eine Vorrichtung gemäß Anspruch 9, bei der eine elastische Vorspannung (53) besteht, welche den Kolben des Temperaturfühlers (115) auf die am meisten zusammengezogene Position des Temperaturfühlers (116) ausrichtet.

11. Eine Vorrichtung gemäß Anspruch 10, bei der die elastische Vorspannung (53) eine Druckfeder (53) ist, die sich zwischen dem oberen Ende der genannten Kammer (40) und dem genannten Durchflussreglerkolben (111) befindet.

12. Eine Vorrichtung gemäß einem der Ansprüche 3 bis 11, bei der eine Schutzvorrichtung für den genannten Temperaturfühler (116) besteht, durch die vermieden wird, dass im genannten Gehäuse Druck über einem vorbestimmten Maximaldruck entwickelt wird.

13. Eine Vorrichtung gemäß einem der vorhergehenden Ansprüche, bei der die Vorrichtung die Form einer Kartusche für ein Ventil hat.

14. Eine Vorrichtung gemäß einem der vorhergehenden Ansprüche, bei dem die Vorrichtung ein Ventil ist und einen einzelnen Betriebshebel hat.

## Revendications

1. Dispositif pour mélanger et régler la température de sortie d'un liquide chaud et un liquide froid, comprenant :
une chambre de mélange (40) ;
un orifice d'entrée du liquide chaud (42) dans ladite chambre (40) ;
un premier orifice d'entrée du liquide froid (113) dans ladite chambre (40) ;
une sortie (18) de ladite chambre (40) ;
un passage de sortie (63) depuis le dispositif qui communique avec ladite sortie de chambre (18) ;
un moyen de dosage du mélange (48, 54) à l'intérieur de ladite chambre (40) apte à modifier les proportions des liquides chaud et froid admis par lesdits orifices d'entrée (42, 113) dans ladite chambre (40) à un débit quelconque de sortie combinée ;
un dispositif de détection de la température (116) apte à détecter la température de sortie de la chambre (40) des liquides mélangés et à contrôler le moyen de dosage du mélange (48, 54) de manière à ce que la température de sortie, à tous les débits de sortie de la chambre (40), ne puisse pas dépasser, sauf d'une petite tolérance pendant peu de temps, un maximum choisi ; et
un deuxième orifice d'entrée de liquide froid (64) dans le passage de sortie (63) du dispositif en aval de l'endroit où la température de l'écoulement de sortie de la chambre est détectée,
la chambre de mélange (40) étant munie d'une paroi cylindrique, l'orifice d'entrée du liquide chaud (42) et le premier orifice d'entrée du liquide froid (113) dans ladite chambre (40) étant sur le côté ou près des extrémités opposées de ladite paroi cylindrique (51) et le moyen de dosage du mélange (48, 54) comprenant un moyen d'obturation joint pouvant glisser à l'intérieur de la chambre (40) sous le contrôle du dispositif de détection de la température (116) de manière à ce que, lorsque l'orifice d'entrée de liquide froid dans la chambre (40) s'ouvre progressivement, l'orifice d'entrée de liquide chaud (42) se ferme progressivement et vice versa, le moyen de dosage du mélange (48, 54) permettant d'obtenir les états suivants du dispositif :
l'orifice d'entrée de liquide chaud (42) étant complètement fermé tandis que le premier orifice d'entrée de liquide froid (113) est complètement ouvert, et le premier orifice d'entrée de liquide froid (113) étant complètement fermé tandis que l'orifice d'entrée de liquide chaud (42) est complètement ouvert,
**caractérisé par le fait que** :
ledit orifice d'entrée de liquide chaud (42) est une partie d'un passage d'entrée de liquide chaud s'étendant radialement (101, 102).

2. Dispositif conforme à la revendication 1, comportant un élément de distribution stationnaire (28, 32) et un élément de distribution mobile (37), l'élément de distribution stationnaire (28, 42) étant doté d'orifices vers l'élément de distribution mobile (37) pour alimenter en liquide chaud et en liquide froid l'élément de distribution mobile (37), l'élément de distribution mobile (37) réglant les proportions de liquide chaud et froid alimenté à l'orifice d'entrée de liquide chaud (42) et aux orifices d'entrée de liquide froid (113, 64) et leurs débits, et permettant un arrêt complet de tous les écoulements auxdits orifices.

3. Dispositif conforme à la revendication 2, comportant de plus un organe (41) soutenant les éléments de distribution (28, 32, 37), et un moyen d'obturation pour obturer entre des parties des éléments de distribution mobile et stationnaire (28, 32, 37), un orifice d'entrée de liquide chaud (35) et ledit orifice d'entrée de liquide froid (33) étant prévus dans le moyen de distribution stationnaire (28, 32), et un chemin de transfert de liquide chaud (36) et un chemin de transfert de liquide froid (67) étant prévus dans l'élément de distribution mobile (37) ; et de plus où tout entièrement ou en partie contenu dans l'organe, ou tout entièrement ou en partie contenu dans l'élément de distribution mobile (37), ou tout entièrement ou en partie contenu dans l'élément de distribution stationnaire (28, 32), il est prévu un espace de convergence (40), ledit passage d'entrée de liquide chaud communiquant avec ledit chemin de transfert de liquide chaud (36) et avec ledit espace de convergence (40), un premier passage d'entrée de liquide froid communiquant avec ledit chemin de transfert de liquide froid (67) et avec ledit espace de convergence (40), une sortie dudit espace de convergence (40), un moyen de réglage de débit (48, 54) à l'intérieur de l'espace de convergence (40) apte à régler le débit des liquides chauds et froids entrant dans ledit espace de convergence (40) en ouvrant progressivement le passage d'entrée de liquide chaud tout en fermant progressivement le premier passage d'entrée de liquide froid et vice versa, et apte à effectuer la fermeture totale dudit passage d'entrée de liquide chaud, ledit dispositif de détection de température (116) qui contrôle le fonctionnement du moyen de réglage du débit (48, 54) dans ladite sortie, un partie de détection de température dudit dispositif de détection de température (116), ledit deuxième passage d'entrée de liquide froid communiquant avec ledit chemin de transfert de liquide froid (67) et avec ladite sortie sensiblement en aval de ladite partie de détection de la température et l'élément de distribution mobile (28, 32) étant mobile vers l'une des positions suivantes : où l'orifice d'entrée de liquide chaud (42) communique avec le chemin de transfert de liquide chaud (36) qui communique avec le passage d'entrée de liquide chaud et en même temps l'orifice d'entrée de liquide froid (113) communique avec le chemin de transfert de liquide froid (67) qui communique avec le premier passage d'entrée de liquide froid ; ou lorsque l'orifice d'entrée de liquide chaud (42) communique avec le chemin de transfert de liquide chaud (36) qui communique avec le passage d'entrée de liquide chaud et en même temps l'orifice d'entrée de liquide froid (113) communique avec le chemin de transfert de liquide froid (67) qui communique avec le premier passage d'entrée de liquide froid et le chemin de transfert de liquide froid (67) communique aussi avec le deuxième passage d'entrée de liquide froid; ou lorsque l'orifice d'entrée de liquide chaud (42) et l'orifice d'entrée de liquide froid (113) ne communiquent pas l'un avec l'autre et bloquent la communication depuis ledit orifice d'entrée de liquide chaud (42) ainsi que depuis ledit orifice d'entrée de liquide froid (113) avec un quelconque dit passage ;
**caractérisé en ce que** le moyen de réglage du débit (48, 54) comprend un piston (111) en contact obturant mais pouvant glisser avec ladite paroi cylindrique et les extrémités périphériques du piston (111) effectuent la fermeture ou l'ouverture des orifices d'entrée de liquide chaud et de liquide froid (42, 113).

4. Dispositif conforme à la revendication 3, où l'espace de convergence (40) a un axe, et une paroi cylindrique (51) coaxiale avec ledit axe, et ledit moyen de réglage du débit comprend un piston mobile (111) pouvant glisser hermétiquement en va et vient en directions axiales à l'intérieur de ladite paroi cylindrique (51), et il y a un orifice à travers ledit piston (111) qui peut assurer la communication entre lesdits passages d'entrée du liquide chaud et froid et où ledit premier passage d'entrée de liquide froid communique avec ledit espace de convergence (40) à ou en position adjacente à une extrémité de ladite paroi cylindrique (51) tandis que ledit passage d'entrée de liquide chaud communique avec ledit espace de convergence (40) à ou en position adjacente à l'autre extrémité de ladite paroi cylindrique (51) et ledit piston (111) peut être positionné au-dessus dudit premier passage d'entrée de liquide froid jusqu'à une position où ledit passage est entièrement fermé, de manière à ce que, à l'usage, aucun liquide froid ne puisse entrer dans ledit espace de convergence (40) tandis que le passage d'entrée de liquide chaud est entièrement ouvert et vice versa, et des positions intermédiaires où les deux passages sont partiellement ouverts.

5. Dispositif conforme à une quelconque des revendications précédentes, comportant une pluralité d'orifices d'entrée de liquide chaud.

6. Dispositif conforme à une quelconque des revendications 2 à 5, où ledit axe de la paroi cylindrique (51) est parallèle à un axe autour duquel on peut faire pivoter ledit moyen de dosage du mélange (48, 54).

7. Dispositif conforme à une quelconque des revendications précédentes, où ledit dispositif de détection de la température (116) se dilate quand il détecte une augmentation de la température et se contracte quand il détecte une baisse de la température, dans des directions axiales.

8. Dispositif conforme à une quelconque des revendications 2 à 7, où ledit dispositif de détection de la température (116) comprend un boîtier et un piston (115) apte à se déplacer axialement en va et vient par rapport audit boîtier, coaxialement avec ledit axe de la paroi cylindrique.

9. Dispositif conforme à la revendication 8 où ledit piston du dispositif de détection de la température (115) peut contacter directement ledit piston du moyen de dosage du mélange (111).

10. Dispositif conforme à la revendication 9, où une force de poussée élastique (53) pousse ledit piston (115) du dispositif de détection de la température vers la position la plus contractée du dispositif de détection de la température (116).

11. Dispositif conforme à la revendication 10, où ladite force de poussée élastique (53) est un ressort de pression (53) situé entre l'extrémité supérieure de ladite chambre (40) et ledit piston (111) du moyen de réglage du débit.

12. Dispositif conforme à une quelconque des revendications 3 à 11, comportant un moyen de protection dudit moyen de détection de la température (116) qui empêche qu'une pression supérieure à une pression maximum prédéterminée se développe à l'intérieur dudit boîtier.

13. Dispositif conforme à une quelconque des revendications précédentes, où le dispositif est en forme de cartouche pour un robinet.

14. Dispositif conforme à une quelconque des revendications précédentes, où le dispositif est un robinet et comporte une seule manette de commande.
